# EUROPEAN PATENT APPLICATION

(11) **EP 2 839 990 A1**
(43) Date of publication of application: **25.02.2015**
(21) Application number: 13181406.3
(22) Date of filing: 22.08.2013
(51) Int. Cl.: B60Q 5/00, G10K 11/22

(54) **Vehicle with an exciter attached to a vehicle body**

(71) Applicant: Harman International Industries Ltd., Potters Bar, Hertfordshire EN6 3JN (GB)
(72) Inventor: Taylor, Garry, Cardiff, South Glamorgan CF5 6HL (GB)
(74) Representative: Bertsch, Florian Oliver

(57) **Abstract**

The invention relates to a vehicle comprising:
- a vehicle body (20),
- an exciter (10) attached to the vehicle body,
- an acoustic interface (50, 50a-d) mounted between the vehicle body (20) and the exciter (10), the acoustic interface (50) being configured to adapt an output of the exciter (10) transmitted to the vehicle body (20) to adapt an acoustic signal emitted by the vehicle body (20).

## Description

### Technical Field

Various embodiments relate to a vehicle, especially to a vehicle generating an electronically/synthesized sound.

### Related art

In the art an exciter is known which is a loudspeaker without a membrane. It mainly comprises an oscillating mass, contact pins to connect to an amplifier and a mounting surface to hook up to the surface to be excited. When a music signal is applied to the contact pins, the oscillating mass starts shaking with the frequency of the applied signal. This oscillation is transmitted to the mounting plate and from there on to a surface the exciter sticks on. Thus, the excited surface will emit the sound signal.

Furthermore, the use of electric vehicles or hybrid vehicles is proliferating. In the context of electric vehicles or hybrid vehicles, systems exist which provide electronic sound models to be output by these vehicles. These sound models are used to improve pedestrian safety. Vehicle manufacturers want to define sounds from the vehicle which adds to brand prestige / identification (i.e. harsh/unpleasant sounds are not desirable). Electric or hybrid vehicles can drive at a very low noise so that these vehicles can be difficult to hear at low speeds due to their drive mechanism. One possibility to improve pedestrian safety is a sound, which may depend on speed and which is projected from speakers at the front and/or rear end of the vehicle making it instantly recognizable that the vehicle is in motion.

In this context a need exists to provide a vehicle which can generate this electronically synthesized sound effectively at a frequency spectrum that is recognizable by pedestrians or other vehicle drivers and which is not unpleasant to the ear.

### Summary

This need is met by the features of the independent claim. Further embodiments are described in the dependent claims.

According to a first aspect, a vehicle is provided comprising a vehicle body and an exciter attached to the vehicle body. Furthermore, an acoustic interface is provided mounted between the vehicle body and the exciter. The acoustic interface is configured to adapt an output of the exciter transmitted to the vehicle body to adapt an acoustic signal emitted by the vehicle body. The interface mounted between the exciter and the vehicle body can act as an acoustic lens and can adapt the sound emitted by the vehicle body. If the exciter were directly attached to the vehicle body, which is normally a metal plate, the emitted sound would be very harsh and at high frequencies and would be unpleasant to the ear. With the acoustic interface the frequency and other acoustic properties of the sound emitted by the vehicle body can be adapted according to the needs of the vehicle application.

A further advantage is the following. In an automotive environment, the size and the geometry of the vehicle body is usually fixed by design requirements and cannot be adjusted to optimize the sound output by the exciter and the vehicle body in combination. With the acoustic interface, the surface, to which the exciter is attached, does not have to follow the shape of the vehicle body. Thus, the attachment of the exciter to the interface is easier compared to the embodiment where the exciter is attached directly to the vehicle body.

Preferably, the exciter is attached via the interface to an inside of an external surface of the vehicle body. Thus, the vehicle body can directly output the sound to the exterior of the vehicle.

Furthermore, it is possible that the interface is at least partly hollow or in another embodiment the interface comprises an enclosed air volume. This partly hollow interface or the interface with the enclosed air volume can help to adjust the sound output, inter alia to lower the pitch of the emitted sound. Furthermore, the interface can be a vented volume of air, meaning that the partly hollow interface comprises at least one opening through which air can enter and exit the acoustic interface. In another embodiment, the interface is a solid block of material or a block of foamed material.

Furthermore, the interface can comprise a lower surface with which the exciter is attached to the vehicle body. This lower surface can follow the shape of the vehicle body to which the interface is attached. The upper surface of the interface, to which the oscillating mass is attached, may be a straight surface and may not necessarily follow the form of the excited surface of the vehicle body.

The material of the interface is selected dependent on the desired acoustic output, suitable materials include plastics, metals, composites, a block of foam material or a cored out solid block material. Another material may be rubber.

Furthermore, the acoustic interface is attached to the exciter with first fixing elements and the acoustic interface is attached to the vehicle body using second fixing elements. The first and second fixing elements may be the same or may differ from one another and may include inter alia screws, an adhesive layer, clips, clamps or straps.

The invention itself, together with further objects and advantages, will best be understood by reference to the following detailed description of the preferred embodiments taken in conjunction with the accompanying drawings.

### Brief Description of the Drawings

Fig. 1 shows an embodiment not forming part of the invention in which an exciter is directly attached to a vehicle body.
Fig. 2 is a schematic view in which an exciter is attached to a vehicle body via an acoustic interface.
Fig. 3 shows a further embodiment in which an exciter is attached to a vehicle body via an interface.
Fig. 4 is a schematic view of an at least partly hollow acoustic interface and an attached exciter.
Fig. 5 shows another embodiment of an at least partly hollow acoustic interface.
Fig. 6 shows a further embodiment of an acoustic interface which is a solid block of material.
Fig. 7 shows a further schematic view of an acoustic interface which contains a layer structure of different materials.

### Detailed Description

In the following, different embodiments are disclosed in which an exciter is attached to a vehicle body. The interface is in the form of either an enclosed volume or a separate shaped panel. The acoustic interface acts as an acoustic lens allowing the interface to be reshaped to optimize the sound output of the combined exciter and vehicle body system.

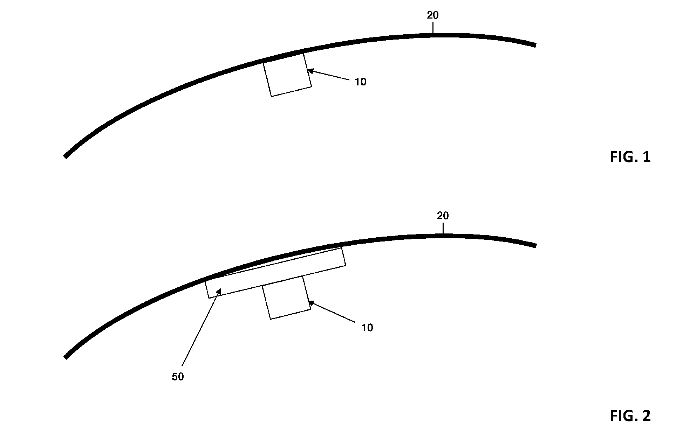

In Fig. 1, an embodiment is shown, in which an exciter 10 is directly coupled to a vehicle body or vehicle body panel 20. The vehicle body 20 is an external surface of the vehicle, wherein the vehicle is not shown completely, but only the part of the vehicle body to which the exciter 10 is connected. With the system of Fig. 1, the sound emitted by the system of the vehicle body and the exciter can hardly be used in a system used to generate an external electronically synthesized sound (eESS). The vehicle can be an electric vehicle or a hybrid vehicle. The sound emitted by the system shown in Fig. 1 would have characteristics which make the use of a system shown in Fig. 1 in a vehicle hardly possible as the emitted sound would be very unpleasant to hear. In the embodiment, the geometry of the vehicle body cannot be adjusted to optimize the sound output, but other design or safety requirements determine the shape of the vehicle body.

The system shown in Fig. 2 improves the situation as between the exciter 10 and the vehicle body 20, an acoustic interface 50 is provided. This interface acts as an acoustic adapter and adapts the output of the exciter transmitted to the vehicle body. The acoustic signal is transmitted to the vehicle body, which then emits the sound. The acoustic interface is now designed in such a way that the sound output is optimized. By using an interface there is the opportunity to widen the bandwidth of frequencies available, "shift" the frequency range into a more useful range and add resonance to improve the "timbre" of the sound produced, creating a richer, more pleasant sound.

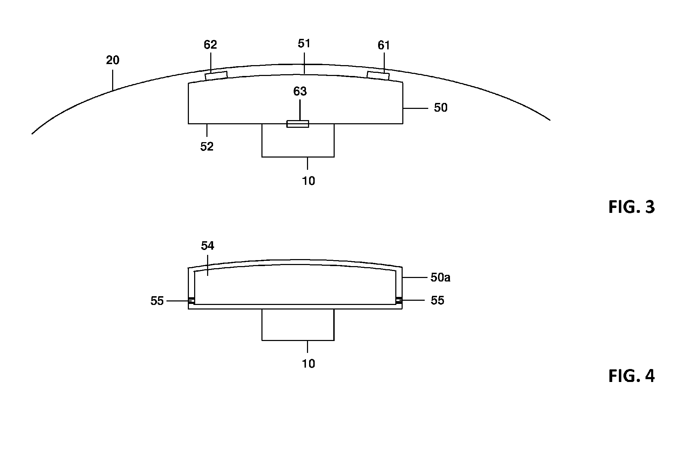

As can be seen in Fig. 3, the interface 50 comprises a first surface 51 which substantially follows the inner surface of the vehicle body 20, the upper surface 52, to which the exciter 10 is connected, may have any form or shape. In the embodiment shown, it is a flat surface, to which the exciter can be easily attached.

In the embodiment of Fig. 4 a partly sectional view of another exciter 50a is shown. In the embodiment shown, the interface 50a is an interface comprising an enclosed air volume. In other words, the interface is at least partly hollow with a hollow part 54. The interface can be an enclosed air volume, however, it is possible that it is a vented enclosed air volume comprising openings such as openings 55, through which air can be exchanged with the outside of the interface.

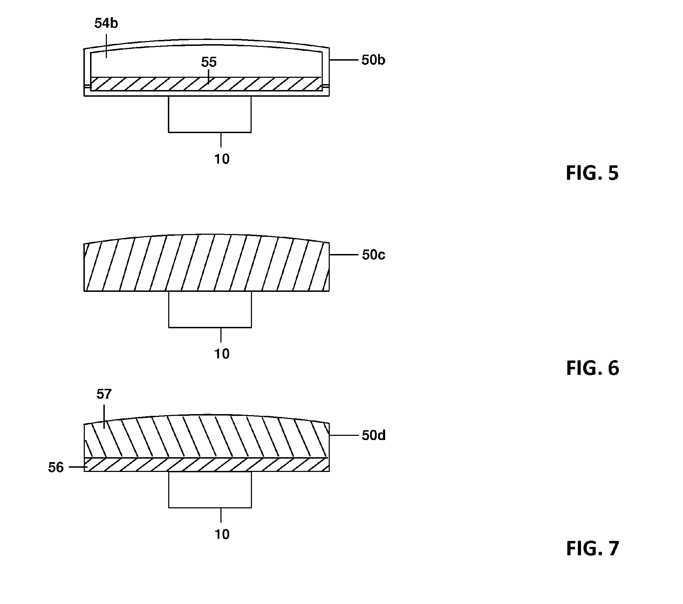

In Fig. 5 a further embodiment of the interface is shown. This interface also comprises an enclosed air volume 54b. Additionally, a further layer 55 is provided. This layer could by of any material, be it metal, plastic, rubber or a layer of foamed material.

In another embodiment shown in Fig. 6, the interface 50c is a solid block of material, e.g. a solid block of metal, plastic, rubber or any other material such as a composite material.

In another embodiment shown in Fig. 7, the interface 50d comprises a layered structure of several materials, a first layer 56 of a first material, followed by a second layer 57 of another material. The two different layers 56 and 57 can be selected in such a way that the sound output of the whole system including the vehicle body and the exciter is optimized.

Referring back to Fig. 3, this system furthermore comprises a first fixing element, e.g. the elements 61 and 62 shown in Fig. 3 which are used to attach the interface 50 to the vehicle body. Furthermore, other fixing elements, e.g. fixing elements 63 are used to fix the exciter to the interface. The fixing elements 61 to 63 can include screws, adhesive, clips, clamps or straps. However, it should be understood that further fixing elements may be used.

The form, shape and material is selected in such a way that an acoustic signal output by the vehicle is obtained which meets certain requirements such as hearing, signal level, etc.

## Claims

1. A vehicle comprising:
- a vehicle body (20),
- an exciter (10) attached to the vehicle body,
- an acoustic interface (50, 50a-d) mounted between the vehicle body (20) and the exciter (10), the acoustic interface (50) being configured to adapt an output of the exciter (10) transmitted to the vehicle body (20) to adapt an acoustic signal emitted by the vehicle body (20).

2. The vehicle according to claim 1, wherein the exciter (10) is attached via the interface (50) to an inside of an external surface of the vehicle body (20).

3. The vehicle according to claim 1 or 2, wherein the interface (50a, 50b) is at least party hollow.

4. The vehicle according to any of the preceding claims, wherein the interface (50a, 50b) comprises an enclosed air volume.

5. The vehicle according to claim 3 or 4, wherein the interface (50a) comprises at least one opening (55) through which air enters the at least party hollow interface.

6. The vehicle according to claim 1 or 2, wherein the interface (50c) is a solid block of material.

7. The vehicle according to claim 1 or 2, wherein the interface (50c) is a block of foamed material.

8. The vehicle according to any of the preceding claims, wherein the interface (51) comprise a lower surface with which the exciter is attached to the vehicle body, wherein the lower surface follows the shape of the vehicle body (20) to which the interface is attached.

9. The vehicle according to any of the preceding claims, wherein the material for the interface is selected from at least one of the following materials: metal, plastic, rubber, a composite of several materials.

10. The vehicle according to any of the preceding claims, wherein the acoustic interface (50) is attached to the exciter (10) with first fixing elements (63), the acoustic interface being attached to the vehicle body using second fixing elements.
